(19) Europäisches Patentamt
European Patent Office
Office européen des brevets

(11) Veröffentlichungsnummer: **0 172 503**
**B1**

(12) # EUROPÄISCHE PATENTSCHRIFT

(45) Veröffentlichungstag der Patentschrift: **16.05.90**

(21) Anmeldenummer: **85109993.7**

(22) Anmeldetag: **08.08.85**

(51) Int. Cl.⁵: **H 01 M 4/96, C 25 B 11/14, G 01 N 27/30, H 01 M 4/90**

(54) Verfahren zur Herstellung von zur Reduktion von Sauerstoff und sauerstoffhaltigen Verbindungen geeigneten Elektroden.

(30) Priorität: **18.08.84 DE 3430487**

(43) Veröffentlichungstag der Anmeldung: **26.02.86 Patentblatt 86/09**

(45) Bekanntmachung des Hinweises auf die Patenterteilung: **16.05.90 Patentblatt 90/20**

(84) Benannte Vertragsstaaten: **DE FR GB**

(56) Entgegenhaltungen:
EP-A-0 046 086    FR-A-2 168 560
DE-B-1 301 304    GB-A-2 024 869
FR-A-1 012 977    US-A-3 198 667
FR-A-2 014 030    US-A-3 284 332
FR-A-2 103 864

ELECTROCHIMICA ACTA, Band 9, 1964, Seiten 413-423, Pergamon Press Ltd, Northern Ireland, GB; K. SCHWABE et al.: "Über Kohleelektroden für die elektrochemische Reduktion von Sauerstoff"

(73) Patentinhaber: **BASF Aktiengesellschaft Carl-Bosch-Strasse 38 D-6700 Ludwigshafen (DE)**

(72) Erfinder: **Habermann, Wolfgang Gonsenheimer Spiess 8 D-6500 Mainz 1 (DE)**
Erfinder: **Hammes, Peter, Dr. Haagweg 14 D-6701 Ruppertsberg (DE)**
Erfinder: **Thoma, Peter, Dr. Peterskopfstrasse 2 D-6710 Frankenthal (DE)**

(56) Entgegenhaltungen:
CHEMICAL ABSTRACTS, Band 84, Nr. 16, 19. April 1976, Seite 547, Zusammenfassung 113548n, Columbus, Ohio, US; & CS-A-159 604 (K. KADIC) 15-08-1975

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 172 503 B1

**Beschreibung**

Ein Verfahren gemäß der Bezeichnung ist aus der Patentschrift US—A—3 284 332 bekannt. Dort wird die Herstellung von dotierten porösen Kohlenstoffelektroden für elektrokatalytische Zwecke beschrieben, wenn sie entweder als Anoden oder Kathoden eingesetzt werden. Die auf Spalte 2, Zeilen 59—68 ausgeführte Behandlung mit $CO_2$ bei hohen Temperaturem führt eine Oxidation und Hydrophilierung der Elektrodenoberfläche hierbei. Die so Vorbehandelte Elektrode wird mit beispielsweise Vanadaten, Wolframaten und Molybdaten dotiert (Spalte 2, Zeilen 27—44; Spalte 3, Zeilen 2—7) und je nach Bedarf mit Sulphiden fixiert (Spalte 3, Zeilen 31—40).

Zur Reduktion von Sauerstoff und sauerstoffhaltigen Verbindungen verwendet man bisher Platin, Silber, Gold, Titan, Mangandioxid, Nickel-Kobalt-Spinelle, Graphit, Kohle und Übergangsmetall-Polyzyklen wie z.B. Eisentetrasulfoniertes Phthalocyanin bzw. Dicobaltporphyrin.

Bei Materialien wie Gold, Titan, Graphit und Kohle erfolgt die Sauerstoffreduktion überwiegend nach dem Zweielektronenschritt (Berl-Mechanismus) gemäß der Gleichung

$$O_2 + 2\,e + 2\,H^+ \rightleftharpoons H_2O_2 \qquad \varepsilon_h = +0,68\ V\ (pH = 0)$$

wobei etwa 0,55 V Spannungsverlust gegenüber dem theoretischen Potential beim Vierelektronenschritt zu verzeichnen sind

$$O_2 + 4\,e + 4\,H^+ \rightleftharpoons 2\,H_2O \qquad \varepsilon_h = +1,23\ V\ (pH = 0).$$

Maßgebend für den Zweielektronenschritt sind bei der Kohle die Struktur der hohen inneren Oberfläche und beim Gold sowie Titan Spuren von Verunreinigungen des Elektrolyten.

Gûnstigere Potentiallagen erhält man bei Verwendung von Platin, Silber, Mangandioxid, Nickel-Kobalt-Spinellen und Übergangsmetall-Polyzyklen wie z.B. Eisen-tetrasulfoniertes Phthalocyanin bzw. Dicobaltporphyrin. Das Potential von Kathoden mit solchen Materialien ist aber trotzdem, auch im unbelasteten Zustand, etwa 0,2 V bis 0,3 V geringer als das theoretische Potential der Sauerstoffreduktion nach dem Vierelektronenschritt. Hinzu kommt, daß diese Katalysatormaterialien wie z.B. Platin, Silber, Nickel-Kobalt-Spinelle durch Verunreinigungen im Spurenbereich die Sauerstoffreduktion wieder weitgehend nach dem Zweielektronenschritt katalysieren und Mangandioxid sowie die Übergangsmetallpolyzyklen keine ausreichende chemische Beständigkeit im Elektrolyten aufweisen.

Es war die Aufgabe der vorliegenden Erfindung, ein Herstellverfahrenfür, Elektroden zu suchen, das es ermöglicht, einen Kohlenstoffträger zu verwenden, der in wäßrigen Mineralsäuren bei Potentiallagen von $\varepsilon_h = +1,3\ V$ bis $\varepsilon_h = +10\ V$ anodisch oxidiert und anschließend mit Molybdän-VI- und/oder Wolfram-VI- und/oder Vandium-V-Verbindungen dotiert wird. Dies Aufgabe wurde durch die Merkmale des Patentanspruchs 1 gelöst. Vorteilhafte Ausgestaltungen des erfindungsgemäßen Verfahrens sind Gegenstand der Unteransprüche 2—6.

Als Kohlenstoffträger kommen Graphit, Koks, Kohle oder Aktivkohle in Betracht. Vorzugsweise wird Graphit verwendet.

Die anodische Oxidation des Kohlenstoffträgers wird für die Kathode und Anode in wäßrigen Mineralsäuren wie z.B. Salpetersäure, Phosphorsäure, Schwefelsäure und Perchlorsäure bei Potentiallagen von $\varepsilon_h = +1,3\ V$ bis $\varepsilon_h = +10\ V$, vorzugsweise $\varepsilon_h = +1,8\ V$ bis $\varepsilon_h = +2,5\ V$ durchgeführt.

Besonders gut geeignet ist wäßrige 2 bis 80 gew.%ige, vorzugsweise 30 bis 65 gew.%ige Salpetersäure. Die anodische Oxidation erfolgt bei Temperaturen zwischen $-2$ und $+100°C$, bevorzugt bei $+10$ bis $+50°C$ und Stromdichten von 0,1 bis 10 $kA/m^2$. Der günstigste Stromdichtebereich liegt bei der anodischen Oxidation zwischen 0,5 und 4 $kA/m^2$ äußerer Kohlenstoffoberfläche.

Die Oxidationszeit kann 2 Sekunden bis zu 2 Stunden, vorzugsweise 5 bis 30 Minuten betragen. Der gebundene Sauerstoff auf der Kohlenstoffoberfläche sollte nach der anodischen Oxidation etwa 30 Atomprozent betragen.

Zum Dotieren und Impragnieren des anoxidierten Kathodenmaterials setzt man gelöste oder fein dispergierte Verbindungen des Molybdäns, Wolframs oder Vanadiums ein.

Geeignete Molybdänverbindungen sind z.B. Ammoniumdimolybdat, Ammoniumheptamolybdat, Ammoniumdecamolybdat, Natriummolybdat, Kaliummolybdat, Molybdäntetrachlorid oder Molybdänoxitetrachlorid, geeignete Wolframverbindungen sind z.B. Natriumwolframat, Kaliumwolframat, Wolframhexachlorid oder Wolframoxitetrachlorid und als Vanadinverbindungen kommen z.B. Natrium- oder Kaliumvanadat, Alkalidivanadate oder -tetravanadate, Natrium-Ammoniumvanadat oder Vanadiumoxitrichlorid in Betracht.

Vorzugsweise verwendet man zur Dotierung des anoxidierten Kathodenmaterials Alkalimolybdate. Bei Einsatz von Vanadinverbindungen muß für eine gute Fixierung auf der anoxidierten Kohlenstoffträgeroberfläche gesorgt werden, damit kein Vanadium in den Elektrolyten gelangt. Vanadiumverbindungen werden deshalb vorzugsweise in Kombination mit Wolfram- oder Molybdän-VI-Verbindungen und/oder durch Überführung in Eisen-, Titan- oder Zirkonvanadate fixiert.

Zur Dotierung löst oder dispergiert man die Molybdän-, Wolfram- oder Vanadinverbindungen oder sonstigen Zusätze in Wasser, Alkoholen wie z.B. Methanol, Ethanol, Ethern wie z.B. Methylethylether oder chlorierten Kohlenwasserstoffen, wie z.B. Chloroform oder Tetrachlorkohlenstoff.

2

Als bevorzugtes Lösungsmittel wird Wasser verwendet. Die Konzentration der Wolfram-, Molybdän- oder Vanadinverbindungen im Lösungsmittel kann 0,01 Gew.% bis zur Sättigungsgrenze, vorzugsweise 0,3 bis 5 Gew.-% betragen.

Nach der Imprägnierung mit den Dotiermitteln kann man die Kohlenstoffträger zur besseren Fixierung trocknen, wobei Halogenide vorher hydrolysiert werden. Die eigentliche Fixierung erfolgt mit wäßrigen verdünnten Mineralsäuren. Bevorzugt wird hierzu 0,1 bis 3 gew.%ige wäßrige Salptersäure oder Schwefelsäure oder Alkalisulfatlösung vom pH 0,5 bis 1,5 verwendet. Eine gute Fixierung wird erreicht, wenn man die Fixierung bei Temperaturen von +15°C bis +30°C bei einer Verweilzeit von 0,5 bis 3 h durchführt.

Nach der Fixierung kann eine zusätzliche Dotierung und teilweise Anreduktion der Molybdän-VI-, Wolfram-VI- und Vanadium-V-Verbindungen mit Sulfiden oder Schwefelwasserstoffen erfolgen. Hierzu verwendet man bevorzugt wäßrige Ammoniumsulfid- oder Alkalisulfidlösungen wie z.B. Natriumsulfid oder Kaliumsulfid. Die Konzentration dieser Lösungen kann 0,1 bis 10 Gew.% an Alkalisulfid, vorzugsweise 1 bis 6 Gew.%, betragen. Zu dieser Dotierung wird das Katalysatormaterial wenige Minuten, vorzugsweise 1 bis 8 Minuten, in die Alkalisulfidlösungen getaucht, anschließend abgetrennt und mit verdünnten wäßrigen Mineralsäuren vom überschüssigen Sulfid befreit.

An Stelle von Sulfiden können zur Anreduktion aber auch andere Reduktionsmittel wie z.B. Hydrazinhydrat, Hydroxylamin, Hydrochinon, Wasserstoff oder die kathodische Reduktion eingesetzt werden.

Als besonders geeignete Aktivierung und Fixierung hat sich nach der anodischen Oxidation des Kohlenstoffträgers eine Dotierung mittels Molybdän-VI-oder Vanadium-V- mit Titan-III- oder Titan-IV-Verbindungen und/oder mit Jod-VII- und/oder mit Jod-V- und/oder mit Tellur-VI-Verbindungen erwiesen. Bei dieser Aktivierung sollte das Atomverhältnis Molybdän bzw. Vanadium zu Titan 2:1, Molybdän bzw. Vanadium zu Jod 1:1 und Molybdän bzw. Vanadium zu Tellur 6:1 bzw. in den Mischungen entsprechend den Verhältnissen angepaßt werden.

Als Titan-III-Verbindungen setzt man vorzugsweise Titan-III-Chlorid und Titanylsulfat ein. Jod wird bevorzugt in Form der Alkalijodate oder Perjodate verwendet, während Tellur vorzugsweise als Alkalitellurit zum Einsatz kommt.

An Stelle von Tellurverbindungen können auch Selenverbindungen verwendet werden. Aus toxikologischen Gründen wird man in den meisten Fällen aber auf den Einsatz dieser Verbindungen verzichten.

Zur besseren Fixierung der Katalysatoren sowie zur Verminderung der Elektrodenpolarisation und Erhöhung der Sauerstoffaustauschstromdichte bei maximaler Polarisation kann man dem anoxidierten Kohlenstoffträger anionische und/oder kationische Polyelektrolyten zusetzen oder solche Gruppen in die Kohlenstoffoberfläche einführen.

Als Polyelektrolyte kommen nicht oxidierbare anorganische Anionen- und Kationenaustauscher wie z.B. Titanoxihydrat, Zirkonoxihydrat, Kaolinit, Montmorillonit, Apatit, synthetischer Hydroxylapatit, Magnesiumoxihydrat, Aluminiumoxihydrat, Aluminium-zirkonoxihydrat sowie organische Anionen- und Kationenaustauscher wie z.B. Polymerisate oder Copolymerisate aus Styrol, Styrol und Divinylbenzol, Styrol und Maleinsäureanhydrid, Acrylester und Divinylbenzol, Methacrylsäureester und Divinylbenzol, Olefinen, perfluorierten Olefinen, sowie Vinylchlorid und Aldehyden, Resorcin und Aldehyd sowie Anisol und Aldehyd, die als ladungstragende Gruppen, Sulfonsäure- und/oder Carboxyl- und/oder quarternäre Ammonium- und/oder primäre, sekundäre oder tertiärfe Amingruppen enthalten.

Bevorzugt kommen synthetischer Hydroxylapatit, Zirkonaluminiumoxihydrat, Zirkonoxihydrat, Titanoxihydrat sowie makroporöse Austauscher aus Styrol und Divinylbenzol oder Copolymere auf Basis von Vinylchlorid, die primäre, sekundäre oder tertiäre Amine oder Sulfonsäuregruppen als ladungstragende Gruppen enthalten, in Betracht.

Für die technische Ausführung werden als Kathodenmaterialien Graphite mit einer offenen Porosität von ≥ 8% verwendet.

Vorzugsweise setzt man Graphite mit einer offenen Porosität von 12 bis 22% ein, die homöoporös und auf der Gaszufuhrseite hydrophobiert sind.

Die Kathode kann als rohr- oder plattenförmige Elektrode ausgeführt sein. In Sonderfällen kann auch mit Granulatschüttungen gearbeitet werden. Weiterhin können Graphit- oder Kohlefilze als Elektrodenmaterial zum Einsatz kommen. Schließlich kann das feinkörnige, aktivierte, kohlenstoffhaltige Katalysatormaterial, gegebenenfalls in Kombination mit organischen oder anorganischen Polyelektrolyten, in poröse gasdurchlässige Kunststoffträgermaterialien wie z.B. Polycarbonate, Silikone oder perfluorierte Olefine eingearbeitet werden.

Das Oxidationsmittel wird beim Betrieb der Elektrode durch das poröse Elektrodenmaterial geleitet oder umspült die Elektroden.

Als Oxidationsmittel für die erfindungsgemäßen Kathoden wird vorzugsweise Sauerstoff oder Luft verwendet. In Sonderfällen können aber auch andere Oxidantien wie z.B. Wasserstoffperoxid, Peroxidisulfate, Perborate, Chlorate, Chlorite, Chlordioxid, Ozon, Salpetersäure, nitrose Gase, Stickstoffdioxid, Eisen-III-salze, Eisen-III-salz-Wasserstoffperoxidgemische Salpetersäure-Wasserstoffperoxidgemische und Salpetersäure-Wasserstoffperoxid-Eisen-III-salzgemische verwendet werden.

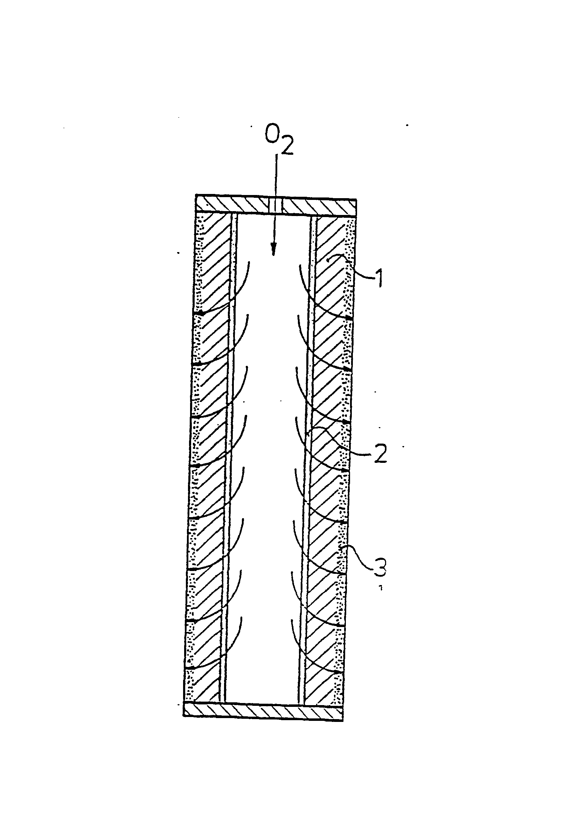

Figur 1 zeigt eine Kathode zur Sauerstoffreduktion aus einem porösen, rohrförmigen Graphit 1, die auf der Innenseite 2 hydrophobiert und auf der Außenseite 3 aktiviert ist. Beim Betrieb der Elektrode wird Sauerstoff von der hydrophobierten Kathodeninnenseite durch das poröse Elektrodenmaterial auf die aktivierte Elektrolytseite gedrückt. Die Sauerstoffzufuhr wird so bemessen, daß etwa 5 bis 10% Sauerstoff mehr durch die Kathode gedrückt werden als durch die Sauerstoffreduktion verbraucht werden.

Beispiel 1

Eine Graphitplatte mit den Abmessungen von 150 mm Länge, 100 mm Breite, 5 mm Dicke und einer offenen Porosität von 16% wird in 50 gew.%iger wäßriger Salpetersäure 10 Minuten bei einer Stromdichte von 3 kA/m$^2$ und einem Potential $\varepsilon_h$ = 2,2 V anodisch oxidiert. Anschließend wird mit Wasser gewaschen und mit 5 gew.%iger Natriummolybdatlösung imprägniert. Danach trocknet man 3 h bei +80°C und befeuchtet im Anschluß daran die imprägnierte Kohle mit 5 gew.%iger wäßriger Eisen-III-Nitratlösung von pH = 0,5. Nach dem Waschen mit Wasser wird der Katalysator mit 0,2 %iger Hydrazinhydratlösung ein bis zwei Minuten befeuchtet, wieder mit Wasser gewaschen, 3 Tage bei Raumtemperatur gealtert und in 5 %ige wäßriger Schwefelsäure eingetaucht.

Bei Einsatz der Elektrode in 5 %iger wäßriger Schwefelsäure und Sauerstoffbegasung stellt sich ein Ruhepotential von $\varepsilon_h$ = 1080 mV ein. Die max. Austauschstromdichte bei Begasung mit Sauerstoff und kathodischer Polarisation beträgt ~9 kA/m$^2$ geometrischer Oberfläche bei einem Potential von $\varepsilon_h$ = 0 mV. Vergleichsweise weist der unbehandelte Graphit und der nur anodisch voroxidierte aber nicht dotierte Graphit unter gleichen Bedingungen folgende Daten auf.

| Graphit | Oxidans | Ruhepotential | max. Austausch stromdichte |
|---|---|---|---|
| Behandlung | Art | $\varepsilon_h$ mV | kA/m$^2$ ($\varepsilon_h$ = 0 mV) |
| unbehandelt | $O_2$ | 680 | 0,05 |
| anodisch oxidiert aber nicht dotiert | $O_2$ | 900 | 0,5—0,8 |
| dotiert aber nicht anodisch oxidiert | $O_2$ | 880 | 3 |

Beispiel 2

Eine Kathode die gemäß Figur 1 aufgebaut ist, besteht aus porösem Elektrographit mit einer offenen Porosität von ~16%. Abmessungen der Kathode betragen 40 mm Innendurchmesser, 60 mm Außendurchmesser und 300 mm Länge. Die Kathode ist auf der Innenseite mit PTFE hydrophobiert und wurde auf der Außenseite durch folgende Verfahrensschritte aktiviert:

Anodische Oxidation der Außenseite der Graphitrohrkathode in wäßriger, 50 gew.%iger Salpetersäure bei Raumtemperatur, etwa 10 Minuten bei 2 kA/m$^2$, Endpotential $\varepsilon_h$ = +2,2 V

Anschließende Imprägnierung mit 5 gew.%iger wäßriger Natriummolybdatlösung

Nachfolgende Trocknung bei +80°C über etwa 8 Stunden

Behandlung mit 0,1 gew.%iger wäßriger Schwefelsäure, etwa 5 Minuten

Alterung 3 Tage bei Raumtemperatur

Waschen mit Wasser und Behandlung mit 0,5 %iger wäßriger Natriumsulfidlösung etwa 2 Minuten Abschließende Entfernung des Restsulfids durch Behandlung mit 0,5 gew.%iger wäßriger Salzsäure.

Die Elektrode kann in Elektrolysezellen mit sauren und neutralen Elektrolyten zur Sauerstoffreduktion eingesetzt werden. Bei einer Stromdichte von 2 kA/m$^2$ können mit einer solchen Sauerstoffreduktionskathode im Vergleich mit einer Wasserstoffabscheidekathode etwa 0,9 bis 1 V Zellspannung eingespart werden.

Beispiel 3

Eine Graphitplatte mit den Abmessungen von 150 mm Länge, 60 mm Breite, 10 mm Dicke und einer offenen Porosität von ca. 16% wird, wie in Beispiel 1, einseitig anodisch oxidiert. Anschließend wäscht man mit Wasser und imprägniert den oxidierten Graphit mit einer Lösung, die 10 Gew.% Natriummolybdat und 1,85 Gew.% Natriumperjodat enthält. Danach wird der imprägnierte Graphit etwa 1 h bei + 85°C getrocknet und 5 Minuten in 5 gew.%ige wäßrige Eisen-III-Nitratlösung vom pH = 1,0 eingetaucht. Nach dieser Imprägnierung wird mit Wasser gewaschen und mit wenig 0,1 gew.%-iger Schwefelsäure nachgespült.

In der 5 gew.%igen Schwefelsäure stellt sich bei Begasung mit Sauerstoff ein Ruhepotential von 1100 mV ein, die max. Austauschstromdichte unter kathodischer Polarisation beträgt 9 kA/m$^2$ bei einem Potential von $\varepsilon_h$ = 0 mV. Die Elektrode eignet sich als Sauerstoffreduktionskathode für saure und neutrale Medien.

4

### Beispiel 4

Eine Graphitplatte mit den Abmessungen wie in Beispiel 3 wird in 50 gew.%iger wäßriger Salpetersäure gegen eine Platinelektrode 15 Minuten bei einer Stromdichte von 2 kA/m² anodisch oxidiert. Das Potential der Elektrode beträgt am Ende der Reaktion $\varepsilon_h$ = 2,1 V. Nach der Oxidation wird mit Wasser gewaschen und mit 1,0 gew.%iger Natriumvanadatlösung imprägniert. Anschließend taucht man die imprägnierte Elektrode ca. 3 Minuten in 15 gew.%ige wäßrige Titan-III-chloridlösung vom pH-Wert = 1 und wäscht dann mit etwas Wasser nach. Beim Einsatz der Elektrode in 5% iger wäßriger Schwefelsäure unter Begasung mit Sauerstoff stellt sich ein Ruhepotential von $\varepsilon_h$ = 1200 mV ein, die max. Austauschstromdichte bei kathodischer Polarisation beträgt ~ 10 kA/m² und einem Potential von $\varepsilon_h$ = 0 mV. In 25 %iger wäßriger Natronlauge stellt sich ein Ruhepotential von $\varepsilon_h$ = +0,3 mV ein, die maximale Sauerstoffstromdichte bei Polarisation auf das rev. Wasserstoffpotential von $\varepsilon_h$ = −828 mV beträgt etwa 10 kA/m². Vergleichsweise weist der unbehandelte Graphit, der nur anodisch voroxidiert aber nicht dotierte Graphit und der nicht voroxidierte aber dotierte Graphit unter den gleichen Bedingungen in der Natronlauge folgende Daten auf:

| Graphit | Oxidans | Ruhepotential | max. Austausch-stromdichte |
|---|---|---|---|
| Behandlung | Art | $\varepsilon_h$ mV | kA/m² ($\varepsilon_h$ = −828 mV) |
| unbehandelt | $O_2$ | − 0,08 | 0,05 |
| anodisch oxidiert aber nicht dotiert | $O_2$ | + 0,3 | 0,7 |
| dotiert aber nicht anodisch oxidiert | $O_2$ | + 0,3 | 1,0 |

### Beispiel 5

Ein Graphitfilz mit den Abmessungen von 100 mm Länge und 20 mm Durchmesser wird in 50 gew.%iger wäßriger Salpetersäure 15 Minuten bei einer Stromdichte von 6 kA/m² (bezogen auf die geometrische Oberfläche) anodisch oxidiert. Das Potential des Graphitfilzes beträgt etwa $\varepsilon_h$ = +1,98 V.

Nach der Oxidation wird mit Wasser gewaschen und der oxidierte Filz mit einer 5 gew.%igen wäßrigen Natriummolybdatlösung imprägniert. Anschließend wird die Probe bei +80°C etwa 2 h getempert und danach etwa 3 Minuten in 0,1 %ige Schwefelsäure eingetaucht. Im Anschluß an diesen Prozeß wird mit Wasser gewaschen, die Elektrode etwa 1 Minute mit 0,5 %iger Kaliumsulfidlösung befeuchtet und schließlich mit Waschwasser vom pH-Wert 1, welches mit Schwefelsäure eingestellt wurde, vom Restschwefel befreit.

Bei Einsatz der Elektrode in 5 %iger wäßriger Schwefelsäure stellt sich in Gegenwart von Sauerstoff ein Ruhepotential von 1080 mV ein. Die max. Sauerstoffaustauschstromdichte bei Begasung mit Sauerstoff unter Kathodischer Polarisation beträgt 10 kA/m² geometrischer Elektrodenoberfläche bei einem Potential von $\varepsilon_h$ = 0 mV. Verwendet man diese Kathode und eine Bleigegenelektrode in 20 %iger wäßriger Schwefelsäure als galvanisches Element, so kann man diese Anordnung zur amperometrischen Messung von Sauerstoff in Gasen verwenden. Bei Gasmengen bis zu 75 ml/min und Konzentrationen bis zu 20,8% ist der niederohmig gemessene Strom proportional zur zugeführten Sauerstoffmenge.

**Patentansprüche**

1. Verfahren zur Herstellung von zur Reduktion von Sauerstoff und sauerstoffhaltigen Verbindungen geeigneten Elektroden, bei dem

(a) ein Kohlenstoffträger in wäßrigen Mineralsäuren bei Potentiallagen von $\varepsilon_h$ = 1,3 V bis $\varepsilon_h$ = +10 V anodisch anoxidiert wird,

(b) der anoxidierte Kohlenstoffträger anschließend mit Molybdän-VI und/oder Wolfram-VI und/oder Vanadium-V-Verbindungen imprägniert und dotiert wird und

(c) der dotierte Kohlenstoffträger mit Eisen-Titan- und/oder Zirkonverbindungen oder mit wäßrigen verdünnten Mineralsäuren, bevorzugt 0,1 bis 3 gew.-%ige wäßrige Salpetersäure oder Schwefelsäure oder Alkalisulfatlösung fixiert wird.

2. Verfahren nach Anspruch 1, dadurch gekennzeichnet, daß man als Kohlenstoffträger Graphit oder Aktivkohle verwendet.

3. Verfahren nach Anspruch 1 und 2, dadurch gekennzeichnet, daß man die anodische Oxidation des Kohlenstoffträgers in wäßriger Salpetersäure bei Potentiallagen von $\varepsilon_h$ = +1,8 bis $\varepsilon_h$ = +2,5 V durchführt.

4. Verfahren nach Anspruch 1 bis 3, dadurch gekennzeichnet, daß man zur Dotierung des Kohlenstoffträgers wäßrige Natrium- oder Kalium-Molybdat- und/oder Wolframat- und/oder Vanadatlösungen verwendet.

5. Verfahren nach Anspruch 1 bis 4, dadurch gekennzeichnet, daß der anoxidierte Kohlenstoffträger Zusätze an anionischen und/oder kationischen Polyelektrolyten enthält.

6. Verfahren nach Anspruch 1 bis 5, dadurch gekennzeichnet, daß eine Anreduktion. mit Reduktionsmittel wie Wasser, Hydrazin, Hydrochinon oder Alkalisulfide durchgeführt wird.

**Revendications**

1. Procédé de fabrication d'électrodes convenant à la réduction d'oxygène et de composés oxygéné, dans lequel

a) on soumet un support en carbone à une légère oxydation anodique dans des acides minéraux aqueux à des niveaux de potential $\varepsilon_h$ de + 1,3 à + 10 V,

b) ensuite, on imprègne et dope le support en carbone légèrement oxydé avec des composés de molybdène (VI) et/ou de tungstène (VI) et/ou de vanadium (V) et

(c) l'on fixe le support en carbone dopé avec des composés de fer et titane et/ou de zirconium ou avec des acides minéraux aqueux dilués, de préférence acide nitrique aqueux ou acide sulfurique aqueux ou solution aqueuse de sulfate alcalin à 0,1 à 3% en poids.

2. Procédé selon la revendication 1, caractérisé par le fait qu'on utilise comme support en carbone du graphite ou du charbon actif.

3. Procédé selon les revendications 1 et 2, caractérisée par le fait qu'on effectue l'oxydation anodique du support en carbone dans de l'acide nitrique aqueux à des niveaux de potential $\varepsilon_h$ de + 1,8 à + 2,5 V.

4. Procédé selon les revendications 1 à 3, caractérisé par le fait qu'on utilise pour le dopage du support en carbone des solutions aqueuses de molybdate de sodium ou de potassium et/ou de tungstate et/ou de vanadate.

5. Procédé selon les revendications 1 à 4, caractérisé par le fait que le support en carbone légèrement oxydé contient des additions de polyélectrolytes anioniques et/ou cationiques.

6. Procédé selon les revendications 1 à 5, caractérisé par le fait qu'on opère une légère réduction avec des réducteurs tels qu'eau, hydrazine, hydroquinone ou sulfures alcalins.

**Claims**

1. A process for the production of an electrode suitable for the reduction of oxygen and oxygen-containing compounds, in which

(a) a carbon carrier is subjected to partial anodic oxidation in an aqueous mineral acid at a potential $\varepsilon_h$ of from 1.3 to + 10V,

(b) the carbon carrier subjected to partial oxidation is subsequently impregnated and doped with molybdenum (VI) and/or tungsten (VI) and/or vanadium (V) compounds and

(c) the doped carbon carrier is fixed with an iron, titanium and/or zirconium compound or with a dilute aqueous mineral acid, preferably from 0.1 to 3% strength by weight aqueous nitric acid or sulfuric acid or an alkali metal sulfate solution.

2. A process as claimed in claim 1, wherein graphite or active carbon is used as the carbon carrrier.

3. A process as claimed in claims 1 and 2, wherein the anodic oxidation of the carbon carrier is carried out in aqueous nitric acid at a potential $\varepsilon_h$ of from +1.8 to +2.5 V.

4. A process as claimed in claim 1 or 2 or 3, wherein the carbon carrier is doped using aqueous sodium or potassium molybdate and/or tungstate and/or vanadate solutions.

5. A process as claimed in claim 1 or 2 or 3 or 4, wherein the partially oxidized carbon carrier contains added anionic and/or cationic polyelectrolytes.

6. A process as claimed in claim 1 or 2 or 3 or 4 or 5, wherein partial reduction is carried out using a reducing agent such as water, hydrazine, hydroquinone or an alkali metal sulfide.

$O_2$